(19) Europäisches Patentamt
European Patent Office
Office européen des brevets

(11) **EP 3 320 512 B1**

(12) **EUROPEAN PATENT SPECIFICATION**

(45) Date of publication and mention
of the grant of the patent:
**28.06.2023 Bulletin 2023/26**

(21) Application number: **16741488.7**

(22) Date of filing: **08.07.2016**

(51) International Patent Classification (IPC):
*G06Q 20/32* (2012.01)    *G06Q 20/38* (2012.01)
*G06Q 20/06* (2012.01)    *G06Q 20/40* (2012.01)
*G06Q 40/04* (2012.01)    *G06Q 30/06* (2023.01)

(52) Cooperative Patent Classification (CPC):
**G06Q 20/32; G06Q 20/3227; G06Q 20/325;
G06Q 20/382; G06Q 20/3827; G06Q 20/401;
G06Q 20/4016; G06Q 30/06; G06Q 40/04**

(86) International application number:
**PCT/US2016/041628**

(87) International publication number:
**WO 2017/011345 (19.01.2017 Gazette 2017/03)**

(54) **MOBILE ATTRIBUTE TIME-SERIES PROFILING ANALYTICS**

ANALYSE DER ZEITSERIENPROFILIERUNG VON MOBILEN ATTRIBUTEN

ANALYSE DE PROFILAGE DE SÉRIE CHRONOLOGIQUE D'ATTRIBUT MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.07.2015 US 201514796547**

(43) Date of publication of application:
**16.05.2018 Bulletin 2018/20**

(73) Proprietor: **Fair Isaac Corporation
San Jose, CA 95110 (US)**

(72) Inventors:
• **ZOLDI, Scott Michael
San Jose, CA 95110 (US)**

• **HOPKINS, Gabriel Paul
London W6 9EZ (GB)**

(74) Representative: **Müller-Boré & Partner
Patentanwälte PartG mbB
Friedenheimer Brücke 21
80639 München (DE)**

(56) References cited:
WO-A2-2006/034205     US-A1- 2009 006 600
US-A1- 2010 293 094     US-A1- 2012 221 721
US-A1- 2013 024 373     US-A1- 2013 204 755
US-A1- 2014 180 974     US-A1- 2014 207 524
US-A1- 2014 316 984

**Description**

**TECHNICAL FIELD**

The subject matter described herein relates to the analysis of behavioral patterns on a mobile device to determine whether a transaction is abnormal.

**BACKGROUND**

In the pursuit of stopping fraud there has been an increased focus on utilizing unique information about the behavior of customers. One common approach monitors mobile attribute patterns of a customer. Conventional methods utilize the proximity of the customer to a point of purchase to determine whether a transaction is fraudulent. For example, determining that a customer's phone and his/her credit card are in the same location provides increased confidence that the transaction is not fraudulent. Likewise, a distance between the mobile device and a transaction point of sale causes increased concern for fraud risk. These conventional techniques are limited because it may not be practical to push a request to a customer's phone to determine its location because the cellular signal may be low, the customer's phone may be turned off, or the amount of time added to the processing of the financial transaction may not be practical, and the like. Businesses need verification techniques that do not cause friction in the customer experience by querying the phone and relaying the success of contact with the device.

Further, the following documents may be considered as providing the background art.

US 2014/180974 A1 discloses scoring of transactions associated with a profiling entity so as to determine risk associated with the transactions. Data characterizing at least one new transaction can be received. A latent dirichlet allocation (LDA) model trained on historical data can be obtained. Based on new words in the received data, the LDA model can update a topic probability mixture vector. Based on the updated topic probability mixture vector, numerical values of one or more predictive features can be calculated. Based on the numerical values of the one or more predicted features, the at least one transaction in the received data can be scored. Related apparatus, systems, techniques and articles are also described.

US 2013/204755 A1 discloses multi-layered, self-calibrating analytics for detecting fraud in transaction data without substantial historical data. One or more variables from a set of variables are provided to each of a plurality of self-calibrating models that are implemented by one or more data processors, each of the one or more variables being generated from real-time production data related to the transaction data. The one or more variables are processed according to each of the plurality of self-calibrating models implemented by the one or more data processors to produce a self-calibrating model output for each of the plurality of self-calibrating models. The self-calibrating model output from each of the plurality of self-calibrating models is combined in an output model implemented by one or more data processors. Finally, a fraud score output for the real-time production data is generated from the self-calibrating model output.

US 2010/293094 A1 discloses systems and methods for assessing and authenticating transactions. Some examples may authenticate transactions based at least in part on a comparison of a newly obtained electronic signature associated with a user with a previously obtained electronic signature associated with the user, where a payment instrument presented for use in the transaction is also associated with the user. Exemplary electronic signatures may comprise any information which may identify the user, such as browser fingerprints, computer fingerprints, IP addresses, geographic IP location information, information associated with a payment, and/or a typing patterns.

US 2014/207524 A1 discloses systems and methods for determining shopping corridor. In one example, a system is disclosed that may include one or more processors and one or more memory devices storing instructions that, when executed by the one or more processors, performs operations consistent with the disclosed examples. In one example, the operations may include receiving geo-coded financial transaction data associated with a plurality of financial transactions that were performed using a financial service account associated with a customer. The operations may also include grouping the financial transactions into a plurality of clusters based on the geo-coded financial transaction data. In another aspect, the operations may include generating a shopping corridor associated with the customer based on at least the plurality of clusters, and providing a financial service using the generated shopping corridor.

WO 2006/034205 A2 discloses a fraudulent business transaction application (FBTA) for monitoring application based fraud. When a consumer supplies account access information in order to carry out an Internet business transaction, the FBTA uses an online fraud mitigation engine to detect phishing intrusions and identity theft. Methods are also provided for calculating travel velocity and transaction frequency, which are useful for determining a fraudulent transaction.

US 2012/221721 A1 discloses computer-based methods and apparatuses, including computer program products, for detecting fraudulent activity. A computing device in a second network receives a plurality of interactions between data centers in a first network and one or more devices, remote from the data centers, of a user, the interactions forming an aggregate user session representing the user's activity over a period of time with the data centers via the devices. The computing device monitors data transaction requests of the interactions and is configured to respond to each request with a response that appears as if the request was executed. If the interactions are harmful, the computing device interdicts the interactions from execution by the data centers and allows the devices to submit additional interactions. If unable to determine whether the subsequent interactions are harmful, the computing device transmits the interactions to the data centers for execution and marks the interactions.

US 2014/316984 A1 discloses a method and system involving using continual authentication and transactional information in a probabilistic framework to provide user and transactional authentication and authorization.

US 2013/024373 A1 discloses a multi-stage filtering process and system for fraud detection. The process includes one or more preliminary filtration stages followed by one or more additional filtration stages that provide for enhanced screening for fraudulent activity. In one such example the preliminary filtration provides for evaluating financial transactions based on financial transaction attribute data and secondary filtration provides for further evaluating the financial transactions based on a customer's account event data. Over a plurality of transactions, a portion of the transactions are cleared for processing (e.g., deemed not likely fraudulent or of too low value to continue processing) after each filtration stage.

US 2009/006600 A1 discloses methods, computer program products, systems and data structures for generating a signature for a network. A network signature may include, for example, network information associated with a network (e.g., IP address, MAC address, domain name, DNS name, routing information, phone number, etc.). A signature of a network that has previously been created can be stored to enable identification of the network in the future and to record parameters, settings, properties and attributes previously used for that network.

## SUMMARY

The present invention is defined by the appended set of claims. This subject matter disclosed herein provides techniques for assessing the likelihood that a transaction is abnormal based on a behavioral pattern of a mobile device and for using behaviors associated with the device to effect fraud detection for transactions that do not occur on the mobile device.

In one aspect, time-series data associated with one or more active operations of a mobile device is collected. The one or more active operations include interaction by a user with the mobile device. Time-series data associated with one or more passive operations of the mobile device is collected. The one or more passive operations are performed by the mobile device during an absence of interaction by the user with the mobile device. Out of band data associated with the user of the mobile device is collected. The time-series data associated with the one or more active operations, the time-series data associated with the one or more passive operations, and the out of band data associated with the user is processed to generate a set of mobile attribute data. The set of mobile attribute data represents one or more attributes that define a behavior of one or more of the user and the mobile device. A profile containing one or more profile variables for each of one or more selected attributes from the set of mobile attribute data is generated. The profile summarizes past usage of one or more of the user and the mobile device and represents a pattern of the past usage. The pattern of the past usage relates to the time-series data associated with the one or more active operations, the time-series data associated with the one or more passive operations, and the out of band data. A set of one or more transactions associated with the mobile device is monitored. The set of one or more transactions relates to at least one of the active operations, the passive operations, and the out of band data. A first score representing a degree to which the transaction is abnormal is generated. The first score is based on a variance of a usage of the mobile device in a time period associated with the set of one or more transactions and the pattern of the past usage.

A set of devices connected to a local network is determined. The mobile device is connected to the same local network. A hash key is generated based on the determined set of devices connected to the local network. The hash key is compared with one or more older hash keys to determine whether a local network device membership is consistent. A second score representing a degree to which the local network device membership is consistent is generated. A determination is made whether the local network is a trusted network using the second score.

The first score is adjusted with the second score.

In some variations, a third score representative of a risk associated with the local network can be generated. The third score can be generated based on one or more of a number of unique devices connected to the local network, a length of time each unique device is connected to the network, an age of the network, and whether any of the unique devices previously conducted a fraudulent transaction.

The local network can be characterized as a home network, a business network, a private network, a merchant network, or a public network.

The pattern of past usage can include one or more favorite attributes of the mobile device. The one or more favorite attributes can be determined using a numbers table, a frequency table, and a rankings table.

One or more differences between the one or more selected attributes in the profile and one or more attributes of a distribution of archetypes to which the mobile device belongs can be determined. The distribution of archetypes can characterize one or more behavioral patterns.

The one or more attributes of the distribution of archetypes can be based on one or more of time-series data associated with one or more active operations of mobile devices associated with others users, time-series data associated with one or more passive operations of the mobile devices associated with the other users, and out of band data associated with the other users.

The time-series data associated with one or more passive operations of the mobile device and aggregation of many devices can result in a determination of one or more travel corridors and travel gateways. The determination can be based on aggregate travel by one or more customers and one or more mobile devices.

The interaction by the user with the mobile device can include interaction with an application installed on the mobile device.

The time-series data associated with one or more passive operations of the mobile device can include a location of the mobile device, a battery power level of the mobile device, device static data, an identity of a network to which the mobile device is connected, and an identity of the user logged onto the mobile device.

The device static data can include one or more of a screen size of the mobile device, a screen resolution of the mobile device, and an operating system of the mobile device.

The user can be associated with the mobile device and one or more additional devices. The mobile device can be associated with the user and one or more additional users.

Implementations of the current subject matter can include, but are not limited to, systems and methods consistent, including one or more features as described, as well as articles that comprise a tangibly embodied machine-readable medium operable to cause one or more machines (e.g., computers, etc.) to result in operations described herein. Similarly, computer systems are also described that may include one or more processors and one or more memories coupled to the one or more processors. A memory, which can include a computer-readable storage medium, may include, encode, store, or the like, one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including but not limited to a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims. While certain features of the currently disclosed subject matter are described for illustrative purposes in relation to an enterprise resource software system or other business software solution or architecture, it should be readily understood that such features are not intended to be limiting. The claims that follow this disclosure are intended to define the scope of the protected subject matter.

## DESCRIPTION OF THE DRAWINGS

The accompanying drawings, which are incorporated herein and constitute a part of this specification, show certain aspects of the subject matter disclosed herein and, together with the description, help explain some of the principles associated with the disclosed implementations. In the drawings,

FIG. 1 illustrates a system for determining whether a transaction is abnormal based on behavioral analytics of the mobile device in accordance with an exemplary implementation;
FIG. 2 illustrates the types of data stored in a data aggregator, in accordance with an exemplary implementation;
FIG. 3 illustrates a recursive frequency list, in accordance with an exemplary implementation;
FIG. 4 illustrates a fingerprint recurrence table, in accordance with an exemplary implementation; and
FIG. 5 illustrates a process for determining whether a transaction conducted on a mobile device is abnormal, in accordance with an exemplary implementation.

When practical, similar reference numbers denote similar structures, features, or elements.

## DETAILED DESCRIPTION

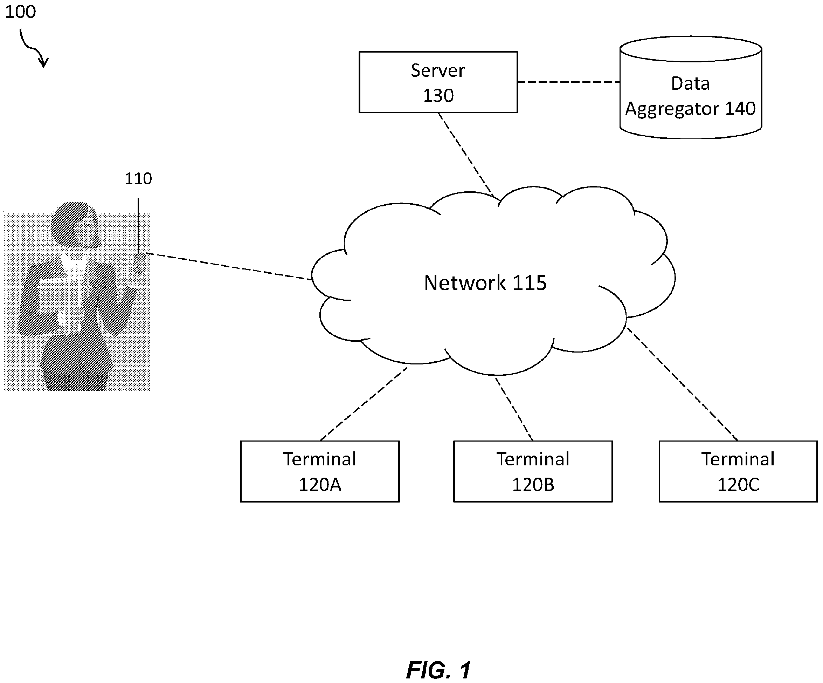

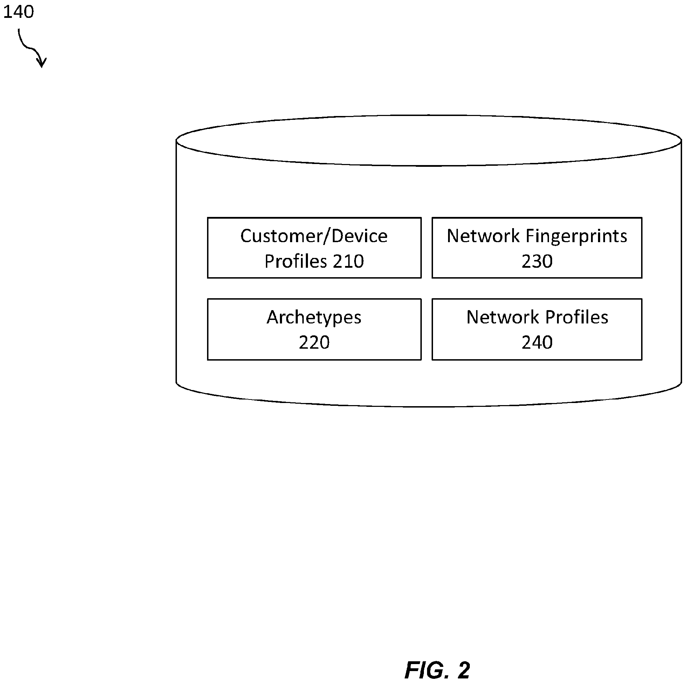

FIG. 1 illustrates a system 100 for determining whether a transaction is abnormal without relying on real-time contact and response from a mobile device. While the instant subject matter is primarily described with respect to financial transactions, the subject matter also applies to other types of transactions including, for example, non-financial transactions (e.g., providing marketing offers based on a user's current position), active or passive transactions performed on a mobile device, and the like. System 100 can include a computing device 110. The computing device 110 can be a mobile device, such as a cellular phone, a laptop computer, a tablet computer, and the like. In some implementations, computing device 110 can be a stationary device including, for example, a desktop computer. Computing device 110 can be configured to transmit various types of data to server 130 over network 115 via a wireless or wired connection. As described below with respect to FIG. 2, this data can characterize operations performed by a user using computing device 110, passive operations performed by the computing device, and the like. Computing device 110 can transmit this data in accordance with a predetermined schedule (for example, on a periodic basis) or upon request from server 130. Server 130 can save this data at data aggregator 140. Data aggregator 140 can be a database, for example, having at least one memory storage device and at least one processor.

System 100 can also include one or more terminals 120A, 120B, and 120C. These terminals can represent physical or virtual locations at which a user may conduct a financial transaction and can include, for example, a retail store (e.g., a brick and mortar store or a virtual Internet storefront), a service provider (e.g., a utilities company), an automated teller machine, and the like. At least one of terminals 120A, 120B, and 120C can be a financial institution at which the user has an account, such as a bank, a credit union, and the like. As explained below with respect to FIG. 2, when a user initiates a financial transaction using mobile device 110 or using one of terminals 120A, 120B, or 120C, the user's bank can query server 130 to determine whether the transaction is consistent with the user's normal behavior. Server 130 can, in turn, use the data stored within data aggregator 140 to make this determination. If the transaction is consistent with the user's normal behavior, then the bank may authorize the transaction. If the behavior is abnormal, then the bank may stop the transaction or flag it for further inspection.

FIG. 2 illustrates a block diagram of the different types of data stored in data aggregator 140. Server 130 can use any combination of this data to determine whether a user's transaction is normal or consistent with the user's behavior. This data can include one or more customer/device profiles 210, archetypes 220, network fingerprints 230, and network profiles 240. Each type of data is described below.

Data aggregator 140 can store one or more customer/device profiles 210. Each customer/device profile 210 can be associated with a different customer or user and can include different types of time-series data related to customer activities. The customer/device profile 210 can store information relating to a customer and his/her computing device. If, for example, the customer has more than one computing device or shares one or more computing devices with another customer, then the customer/device profile 210 can store information for any of these customers and their devices. As such the hierarchy of customer/device profiles 210 may not be one-to-one but can involve a hierarchy of unique and shared customer/device profiles for a particular customer. In some implementations, customer/device profile 210 can store only customer related data, only device related data, or a combination of both types of data. Other variations are possible including, for example, the use of two profiles to separately store customer related data and device related data. As explained in more detail below, the customer related data can relate to, for example, financial transactions associated with the customer (e.g., purchases), non-financial transactions associated with the customer (e.g., a change of address), customer preferences (e.g., a favorite hotel chain), and the like. Device related data can include, for example, a device identifier, the version of an operating system running on the device, a location of the device, and the like. Customer related data and device related data can overlap. If, for example, a customer uses computing device 110 to make a credit card purchase, then data associated with this purchase (e.g., transaction cost, means of payment, description of purchase) can relate to both the customer and the device.

Data aggregator 140 can store one or more of the customer/device profiles 210. Time-series data can be associated with active operations of the user's computing device 110. An active operation can occur when a user interacts with computing device 110. During this time, the computing device 110 can transmit time-series data associated with these operations to server 130 which, in turn, can save this data to the data aggregator 140 and update the customer/device profile 210 profile at the data aggregator.

For example, when a user launches an application on mobile computing device 110, such as a banking application, the computing device can transmit session information to server 130. The time-series data associated with this active operation can include, for example, the time at which the application was launched and/or terminated, the network to which computing device is connected, information representative of an operation performed by the mobile application (e.g., balance inquiry, transfer of funds, request to increase credit limit), and the like. In another example, if a user launches a online banking application on computing device 110 to make a funds transfer, the time-series data transmitted to server 130 can include a description of the destination bank account number, the transfer amount, the origination bank account number, the navigation within the banking application, new payee information, and the like to server 130. In another example, if a user launches a shopping application on computing device 110 to make a purchase, the time-series data transmitted to server 130 can include a description of the purchased item, the purchase cost, the means of payment, the bank account number associated with the payment, and the like. If the user completes the purchase at a physical brick and mortar store by paying on computing device 110, the time-series data transmitted to server 130 can include a store identifier, the location of the store, and the like. In yet another example, if the user launches a social media application on computing device 110 to post pictures and descriptions of his/her whereabouts, the time-series data transmitted to server 130 can include these photo descriptions, the locations associated with these photos, the day and time at which these photos were taken or uploaded to the social media application, and the like. In still another example, the user may launch different mobile applications on computing device 110, such as travel sites, news sites, games, and the like. These applications can be representative of the user's interests, and computing device 110 can transmit information regarding these applications to server 130 as time-series data. This information can include, for example, the identity of the launched application, when the user launched the application, how long the user used the application, a description of operations performed in the application, and the like. Server 130 can save this data to customer/device profile 210 at data aggregator 140.

A second type of time-series data stored in customer/device profile 210 can be associated with one or more passive operations performed by the computing device 110. Computing device 110 can perform a passive operation when a user is not interacting with the computing device. For example, while computing device 110 is in an idle state, the computing device can transmit data representative of its current location, a battery power level of the computing device, the identity of any networks to which it is connected, the identity of the user logged onto the computing device, device static data (e.g., screen size, screen resolution, operating system and version, chip set, carrier information), and the like. Computing device 110 can transmit this data to server 130 which, in turn, can save this data to the customer/device profile 210 at data aggregator 140. Computing device 110 can transmit this information at predetermined intervals during periods of user inactivity, during context-specific vents, upon request by server 130, upon connection to a known WiFi network, and the like.

Customer/device profiles 210 can also store out of band data associated with a user. Unlike the time-series data described above which can originate from computing device 110, out of band data can come from other sources, such as terminals 120A, 120B, and 120C. For example, if a user withdraws money from an automated teller machine 120A, the ATM can send out of band data associated with the withdrawal to server 130. This data, which can include the ATM's location, the time of withdrawal, the account number associated with the withdrawal, the amount of the withdrawal, and the like, can be collected as out of band data. In another example, if a user purchases an item at a retail store 120B using a customer loyalty card, the retail store can send out of band data regarding the transaction to server 130 via network 115. This data can include, for example, the user's customer loyalty number, a description of the purchased item, how frequently the user shops at the retail store, the user's purchase history, and the like. In another example, if a user logs onto his/her banking account using a device other than computing device 110, then the device can transmit the user's login information as out of band data to server 130. Server 130 can save this out of band data to the customer's profile at data aggregator 140. While out of band data is generally associated with customer related data, it can also be associated with device related data. For example, if a user has multiple computing devices 110 and makes recurring utility payments with each device, then the out of band data from each payment can be associated with the user as well as the devices.

Data aggregator 140 can use any combination of the data stored in customer/device profiles 210 to generate one or more behavioral patterns associated with the customer and his/her computing devices 110. These behavioral patterns can track, for example, the typical movement, use, and connectivity of the computing device 110 throughout the day. In order to minimize user inconvenience, server 130 can collect time-series data and out of band data in a non-intrusive manner. As described above, time-series data and out of band data can be collected at regular intervals or on demand. This data can form various patterns of normal behavior associated with the user's and his/her devices' daily activities. These patterns can characterize, for example, when the user generally wakes up, the route taken to drop off his/her children at school, the route taken to the user's office, what type of establishments the user visits throughout the day, whether the user goes on business trips, and the like. These patterns form natural behavioral expectations of typical device use for that user and can include one or more favorite behaviors of the user and his/her mobile devices.

Data aggregator 140 can use these behavioral patterns of normal and expected behavior to determine a score. This score can be representative of whether a transaction initiated by the mobile device is normal and consistent with these behavioral patterns. A user's behavioral pattern can include any combination of the following attributes: a home location, a work location, home network fingerprints, work networks, triangulation of coworkers based on the computing device's location and/or network, triangulation of co-inhabitants based on the computing device's location and/or network, commute routes, favorite geolocations, travel/vacation destination favorites, and the like.

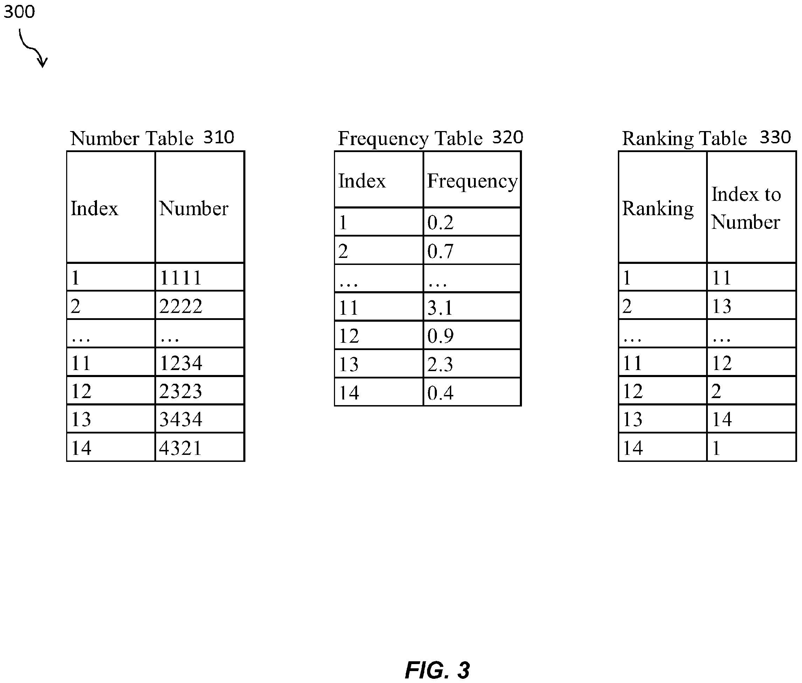

Server 130 and/or data aggregator 140 can use streaming analytics recurrence based technology to determine a user's favorites from the different time-series data and out of band data collected by server 130. FIG. 3 illustrates a recursive frequency list 300 that summarizes a user's favorites. This recursive frequency list 300 can include tables 310, 320, and 330. Data aggregator 140 can save one or more of these tables to each customer/device profile 210 and can update these tables with each new polling of attribute data from computing device 110 or terminals 120A, 120B, and 120C. Each set of tables 310, 320, and 330 can be associated with a different attribute. These attributes can include time-series data associated with active and passive operations of a mobile device, such as computing device 110, or out of band data. For example, a first set of tables can represent a first attribute (e.g., a user's favorite restaurant); a second set of tables can represent a second attribute (e.g., a user's favorite night time locations); and a third set of tables can represent a third attribute (e.g., a user's favorite travel routes). Server 130 can use recursive frequency list 300 and one or more of its tables to inform its abnormality determinations. In some implementations, recursive frequency list 300 and one or more of its tables can be made available to external systems to leverage the frequent behavior information associated with the use of a customer's devices in external real-time fraud systems.

Table 310 is a number table that can include the n most frequent attribute values associated with a particular attribute. For example, if recursive frequency list 300 is associated with a user's favorite restaurant (i.e., the attribute), then the numbers in table 310 can represent the merchant ID of the restaurants that the user dines at (i.e., the attribute values). For example, "1111" can correspond to Morton's Steakhouse, "2222" can correspond to the Stinking Rose, and "4321" can correspond to McDonald's, for example.

Table 320 is a frequency table that can include pseudo-frequencies of the n most frequent values in table 310. It should be noted that these frequencies are not true frequencies. Rather, these frequencies can be pseudo-frequencies that approximate or estimate the true frequencies of the corresponding values and can be applied over a decayed time or event window.

Table 330 is a ranking table that can rank the numbers in table 310.

Number table 310 and frequency table 320 can be coupled via common indices. For example, the frequency for number "1111" (having index "1" in number table 310) is "0.2." The frequency for number "2222" (having index "2" in the Number table) is "0.7." The frequency for number "4321" (having index "14") is "0.4." Ranking table 330 can store the common indices of number table 310 and frequency table 320 in decreasing order of frequency, although other forms of presentation can be used. For example, referring to ranking table 330, index "11" in number table 310 (corresponding to number "1234") has the highest frequency ("3.1"); index "13" (corresponding to the number "3434") has the second-highest frequency ("2.3"); and so on.

When a new attribute value measurement is received (either from computing device 110 or any of terminals 120A, 120B, and 120C), server 130 can inspect number table 310 to determine whether the attribute value is frequently occurring for the computing device. An attribute value can be frequently occurring if, for example, it appears in ranking table 330, appears in the top half of the ranking table, appears in the top 5 values in the ranking table, appears in the top 3 values in the ranking table, and the like. Depending on whether the attribute value is frequently occurring, server 130 can update tables 310, 320, and 330 according to the following guidelines:

- All the frequencies in frequency table 320 can be decayed by a multiplicative factor $\beta$, $0 < \beta < 1$;
- Number table 310 and frequency table 320 can be updated as follows:

  ○ If the current number or value is not in number table 310, then the least-frequent number in ranking table 330 can be replaced with the current number if the least frequent number's frequency (based on the frequency table

$$0 < \delta < \frac{1}{1 - \beta}$$

320) is less than a threshold $\delta$, where . In some implementations, the threshold $\delta$ can be determined adaptive thresholds based on match rates and recycling rates associated with number table 320. The frequency of the current number or value is initialized to be $\alpha$.

  ○ If the current number or value is already in number table 310, then its frequency is increased by $\lambda$.

- Server 330 can update ranking table 330 to reflect any changes to the ranking of numbers in number table 310 based on the above update.

The frequencies in frequency table 320 can be based on a ranking associated with the values of $\delta$, $\beta$, and $\lambda$. These values can depend on and can vary based on the attributes monitored in number table 310. For example, if $\beta$=0.9, $\lambda$=1, and $\delta$=1, then this scenario can relate to a slowly decaying set of frequencies. In this scenario, past favorites can take a long time to decay ($\beta$ close to 1) and slow to be replaced by new entries (if frequency is less than $\delta$=1). This scenario can be representative of a long memory recursive frequency list 300. In another example, if $\beta$=0.1, $\lambda$=2, and $\delta$=0.5, then this scenario can relate to a rapidly decaying set of frequencies where past favorites decay quickly ($\beta$ close to 0) and are frequently replaced by new entries (if frequency is less than $\delta$=0.5). The exact setting of $\delta$, $\beta$, and $\lambda$ can be based on the desired memory characteristics of recursive frequency list 300 and the expected frequency of new numbers in the different types of time-series data.

Server 130 can use recursive frequency list 330 to develop patterns of user behavior and compile a list of learned favorite attributes. Consequently, when server 130 receives data indicative of a transaction that deviates from these favorites, then the server may determine that this transaction is risky. This assessment can be used to inform other fraud decisions. For example, if computing device 110 sends time-series data associated with an online banking transaction, then server 130 can compare the collected data with various attributes stored in recursive frequency lists 330. Using these lists, server 130 can determine, for example, the last location of computing device 110 and whether that location a favorite location; whether the computing device is currently at the user's home or at work and whether this location is different from the user's favorite locations; and the like. The recursive frequency list 300 can also be made available to external fraud solutions where the behavioral favorites are leveraged by external fraud systems to reduce false positives in fraud actions based on these unique customer behavioral insights.

In another example, if the user initiates a financial transaction (e.g., a purchase) at a terminal, such as terminal 120B, then the terminal can transmit out of band data associated with this transaction to server 130. Server 130 can, in turn, save this data to the user's customer/device profile 210. Server 130 can then compare this out of band data to the attributes stored in the user's recursive frequency list 300 to determine whether the transaction is abnormal. In doing so, server 130 can determine, for example, the last location of computing device 110 and whether this location is a favorite location; whether computing device 110 is within a reasonable travel velocity to the transaction location; and, given the past trajectory (i.e., previous locations and velocity of travel) of computing device 110, whether a realistic commute trajectory can be generated ending at the location of the last out-of-band transaction.

As the above example shows, while a user's favorites are important in determining whether a transaction is consistent with a user's behavioral patterns, it may also be important to understand the user's travel trajectory (based on the location of computing device 110) to determine whether a particular transaction is consistent with these expected behavioral patterns. Rather than simply correlating a computing device's location with purchase location (as is common in conventional techniques), the techniques disclosed herein are capable of developing an understanding of each user's unique behavior using time-series data and out of band data.

Favorite lists use historical data to derive normalcy by seeing repeated occurrences of various attributes (e.g., networks, locations, application use, and the like). However, in some transactions, normalcy may be violated because the transaction may have attributes that are inconsistent with this historical data even though the transaction may be legitimate. In order to avoid falsely flagging these transactions as abnormal, server 130 can use collaborative profiling techniques to leverage one or more archetypes and can compare the transaction's attributes to these archetypes. Each user and/or computing device can be cast into a set of archetypes. These archetypes can define the likelihood of different transaction attributes associated with a distribution of users and/or devices. These attributes can include, for example, where people in a particular set of archetypes likely buy their groceries, where they vacation, how much money they spend at dinner, whether they have pets, and the like. Server 130 can compare the transaction's attributes to the device's archetype distribution to determine whether the transaction is abnormal.

Returning to FIG. 2, archetypes 220 can be saved at data aggregator 140. Data aggregator 140 can develop archetypes 220 using the data stored in customer/device profile 210 (i.e., the time-series data associated with active and passive operations of computing device 110 and out of band data). Data aggregator 140 can bring the data in profiles 210 into a Bayesian model in order to produce and update archetypes 220. These archetypes 220 can represent clusters of generally correlated behavior associated with a particular group of users and their computing devices 110. Using, for example, location information (latitude and longitude polling) from computing devices 110, data aggregator 140 can understand the computing devices in terms of their mobility and location preferences. These patterns can be derived from observed data using collaborative filtering technologies over a large number of individual mobile attribute streams. U.S. patent application no. 13/725,561, the contents of which are herein incorporated by reference in their entirety, describes a similar system.

For instance, data aggregator 140 can learn location archetypes based on commonality of shared circles that people run in. For example, people typically work in a different postal code than where they live. Some may have long commutes, while others may have short commutes. Based on where they work, these people may also have different shopping/leisure activities and different business travel patterns. Data aggregator 140 can learn and group these commonalities into archetypes 220. Accordingly, archetypes 220 can differentiate people that work in town from those that work near town or in the city. Data aggregator 140 can further refine archetypes 220 based on any applications that are running on computing devices 110. Users generally use mobile applications that are reflective of their interests. For example, business travelers can install and use travel related applications on their computing devices; sports fans can install and use sports related applications on their computing devices; and teenagers can install and use gaming applications on their computing devices. As these examples show, the types of mobile applications installed on a user's computing device 110 can indicate different expected behaviors including, for example, a user's interests and how the user spends his/her leisure time (with social applications, for example) or work hours (with productivity applications, for example). Information regarding these applications can be transmitted to server 130 and data aggregator 140. This information can include, for example, an application identifier, a description of the application, when the application was launched, how long the application was used, how frequently the application is used, and the like. Data aggregator 140 can use this information to created learned archetypes of typical behaviors and anticipated future behaviors.

When server 130 receives data associated with an unfamiliar financial transaction from computing device 110 or from one of terminals 120A, 120B, and 120C, the server can determine the device's distribution in archetypes 120 associated with the computing device and determine the degree of change in the archetype distribution of the device if the transaction attribute is included in customer/device profile 210. A small change in the archetype distribution can indicate that the transaction attribute is likely for a computing device 110 having the same archetype distribution. A large change in the archetype distribution can indicate that the transaction attribute is not consistent with a computing device 110 having the same archetype distribution. The degree of change can be based on a difference between the transaction's attributes and the attributes anticipated based on the archetype distribution. Data aggregator 140 can monitor archetype distribution changes for a computing device 110 over time to understand shifts in behavior of the computing device. Understanding these changes in behavior can, in turn, allow the data aggregator to determine what types of events are indicative of risky behavior (i.e., behavior that is not consistent with the computing device's archetype distribution).

By using archetypes 220, it is unnecessary for server 130 to have seen a particular transaction (i.e., attributes associated with the transaction are already recorded in this particular customer/device profile 210) in order to determine whether it is normal or abnormal. Rather, server 130 can simply compare this particular transaction to transactions of other users or computing devices 110 in the same archetype distribution to determine whether the transaction is probable (i.e., consistent with the archetype distribution). For example, computing devices 110 associated with permanent addresses in the northern San Diego and work addresses in downtown San Diego may be associated with users who are more likely to shop in Beverley Hills and La Jolla and take vacations in Napa than users who shop in Oakland and take vacations in Yuma.

Archetypes can also be used to predict the expected mobility of users and their computing devices 110. For example, travelers who visit New York City may use travel applications, theater booking applications, and business applications on their computing devices 110. In using these applications, the computing devices 110 can transmit data regarding locations, hotels, restaurants, tourist attractions, and the like to server 130 which, in turn, can save this data to customer/device profiles 210 in data aggregator 140. This data can be correlated with other information, such as financial payment transactions associated with purchases at these sites. From this information, server 130 and/or data aggregator 140 can infer the type of locations that computing device 110 visited. This capability can be useful when this type of information is not offered by a mobile payments application, such as when transactions are made with credit/debit cards. Data aggregator 140 can generate one or more archetypes 220 based on this travel related data. Server 130 can use these travel related archetypes 220 to determine a probability of movement/mobility for other similar tourists in the same area. In another example, if a user uses his/her computing device 110 while visiting a tourist attraction in London (e.g., Buckingham Palace), then there is a high likelihood that the computing device is associated with a tourist. Based on this information, server 130 can compare this computing device's behavior with the behavior of others in archetype distributions associated with tourists in London to determine whether the computing device's movements and transactions are normal.

Returning to FIG. 2, data aggregator 140 can also store one or more network fingerprints 230. An important part of the risk detection process is determining whether a financial transaction is being conducted over a trusted network. Given that much commerce and banking transactions occurs over a customer's home network, it can be important to identify a customer's home network as well as the devices (e.g., other computing devices 110) connected to the network. To that end, server 130 can generate a unique network fingerprint using the identity of all devices connected to the network and can measure the consistency of network membership. Network membership can represent the identity of devices connected to a network.

When a computing device 110 is connected to a user's home network, the computing device can scan the network to determine the identity of all other devices connected to the network. These devices can include, for example, computers, internet television sets, mobile devices, home gaming systems, and the like. The devices attached can vary based on what devices are at home, what devices are turned on, what new devices are added, what old devices are discarded, and the like. The network fingerprint can include an algorithm that combines the observed devices into a unique hash key, for example. As devices connect and disconnect to the network, the network fingerprint can change. In order to determine the consistency of network membership, server 130 can compare the current network fingerprint with historical network fingerprints. Tracking the consistency of network membership can make it difficult for a fraudster to spoof a particular network. Fraudsters who are successful in spoofing the network name (e.g., the service set identifier or SSID) are unlikely to physically connect to the actual network and be able to scan for devices to generate the correct network fingerprint, particularly when their own device is used to compute the network fingerprint.

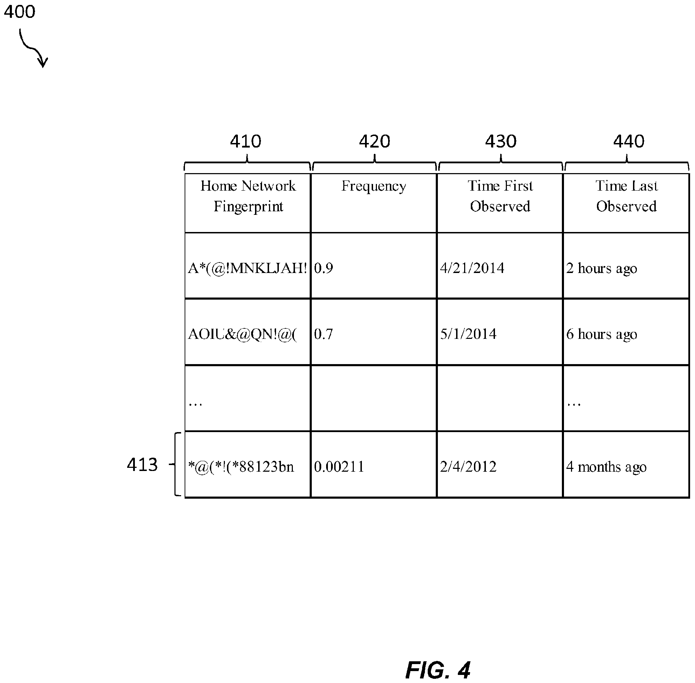

FIG. 4 illustrates a fingerprint recurrence table 400. Table 400 can include different home network fingerprints 410. Each network fingerprint can correspond to a different collection of devices connected to the user's home network. Table 400 can include various statistics associated with each network fingerprint 410 including its frequency of appearance 420, the first time at which the network fingerprint was observed 430, and the last time the network fingerprint was observed 440. Generally, some networks can have 1 or 2 dominant network fingerprints that appear with a high frequency. These dominant network fingerprints can include devices that are typically connected to the network during evening hours at home. These devices can belong, for example, to a user and his/her immediate live-in family. Some network fingerprints, such as network fingerprint 413, may appear less frequently. This can occur when, for example, a friend or relative visits the user at home and connects to the user's home network.

In some implementations, a network fingerprint can also involve bitmaps of device identifiers, IP addresses, or manufacturing information to allow for matching of devices. Including this information in the network fingerprint can make the fingerprint more difficult to spoof. In order to determine whether a transaction conducted on a network is normal, server 130 can examine the network fingerprint at the time of the transaction. If, for example, the network fingerprint at the time of transaction is an exact match with a network fingerprint in fingerprint recurrence table 400, then it is likely that the transaction is normal. An exact match can occur when all captured information (e.g., MAC address, IP address, manufacture chip set, mobile phone number, and the like) associated with the network fingerprint at the time of transaction matches a network fingerprint in fingerprint recurrence table 400. In some implementations, however, only a partial match may be required in making this determination. A partial match can allow some of the information, such as a mobile phone number, to change and still be considered a match. Exact matches are preferred but can be too restrictive given natural changes in operating systems, device configurations, and the like that may occur during the natural lifecycle of a device. The server 130 can generate a score based on how much consistency is seen in the map of connected device attributes. For example a network fingerprint might be captured and a challenge posed to the mobile device in a second level of authentication where there could be partial matches or network fingerprints utilizing manufacturer, chip set, revision of firmware, and the like.

A high network fingerprint score can indicate that the network fingerprint has been frequently observed and more likely to be trusted. A low high network fingerprint score can indicate that the network fingerprint is rarely observed, has partial matches, and is less likely to be trusted. If, for example, a user is using a computing device 110 to conduct a financial transaction, then the score generated by this model can allow a banking application on the computing device 110 to validate that the user is connected to a trusted network before allowing the financial transaction to complete. In some implementations, server 130 can adjust the abnormality score of the transaction based on the consistency score associated with the network fingerprint. If, for example, a transaction is determined to be abnormal (based on its abnormality score), server 130 can decrease this score (i.e., decrease the degree of abnormality) if the transaction is conducted on a trusted network.

In addition to storing network fingerprints at data aggregator 130, these fingerprints can also be included in banking applications. When a device connects to a home network, it may be required to report the current network fingerprint to the banking application for authentication purposes. The banking application can then compare the current network fingerprint to its list of known fingerprints in order to authenticate the device. These fingerprints can be sent in an encrypted fashion to the banking application, for example, so that a challenge can be posed to mobiles/devices that are trying to impersonate network connectivity or to validate a service to server 130 at the time of the financial transaction.

Returning to FIG. 2, data aggregator 140 can also store network profiles 240. A network can be uniquely identified by a concatenation of a network identifier and position information (e.g., latitude and longitude coordinates), for example. Each network profile 240 can record the number of unique computing devices connected to the network, how long each particular device is connected to the network, characteristics of the connected devices (e.g., IP and MAC addresses), the age of the network, the aggregation of mobile device scores that are connected to the network, and the like. Server 130 can use any combination of these characteristics to produce a network score indicative of risk. A low score can be indicative of a trusted network, while a high score can be indicative of a risky network. A trusted network can include older private networks. A risky network can include newer public networks previously associated with fraudulent transactions. The network profile 240 can include data regarding what devices and customers having a history of fraud have previously connected to the network.

Similar to the user archetypes described above, data aggregator 140 can develop network archetypes using collaborative profiling techniques. Archetypes can be used to categorize networks including, for example, whether a network is a home network, a business network (e.g., a corporation's office network), a merchant network (e.g., a retail store's network), a private network, a public network (e.g., an airport network), and the like. Server 130 can use these network archetypes and network scores to determine whether a transaction conducted on a particular network is normal or abnormal (i.e., risky). For example, server 130 may determine that a cellular phone is conducting an online banking transaction using a new public network. In order to assess the risk associated with this transaction, server 130 can check the network's profile 240, its corresponding network archetype distribution, and its corresponding score. As described above, this network score can be high because it is a public network and relatively new. The newness of the network can suggest that the network was set up to attract devices for man-in-the-middle or evil-twin attacks, for example.

In some implementations, big data aggregation techniques can be used to mine data in customer/device profiles 210 and network profiles 240 data for trends. As data is collected across devices, there comes much predictive power in data aggregation techniques. As an example, a person that consistently connects to networks during evening hours but suddenly change locations or networks is more likely to arouse suspicion than a business traveler who often changes locations. Based on this data point, data aggregator 140 can identify business travelers based on a percentage of their time away from a home network. Data aggregator 140 can also determine correlations between how common or uncommon a business traveler connects his/her computing device 110 to a "night time" network, such as a hotel guest network. Based on this information, data aggregator 140 can use position information associated with the hotel guest network (e.g., latitude and longitude coordinates) to determine the hotel's location. If a large number of business travelers connect to these types of guest networks, then data aggregator 140 can identify business locations with a high level confidence. These big data aggregation techniques can reduce concerns of false positives when a customer is traveling and conducting financial transactions at unfamiliar locations. These techniques can also be used to distinguish personal travel from business travel. For example, if a large number of customers reserve hotel rooms near an amusement park and spend money at souvenir shops, then data aggregator 140 can infer that these establishments may be leisure destinations rather than business destinations. Data aggregator 140 can also anticipate the user's and his/her computing devices' future locations and financial transactions based on established archetypes. For example,, a user may purchase souvenirs at tourist locations visited by other tourists in the same city)

Big data aggregation techniques can also enrich knowledge not necessarily available for some mobile device connections. For example, when determining shared home and work networks, some phones may be able to determine encryption levels on the network. Other phones, however, may be unable to do so because collected data may be associated with a particular device and/or operating system version. Big data aggregation techniques, therefore, offer abilities to enrich data beyond the lowest common denominator for some devices / operating system versions.

Big data aggregation techniques can also inform travel corridors. As users travel with their computing devices 110, there are natural routes of their daily commutes which are shared by many other customers. The commonality of these travel commutes help determine natural travel corridors for commuters. Often, those devices aggregate at gateway locations, such as bus stations, metro stops, rail stations, and airline terminals, which inform likely future destinations for the device based on aggregation of other customers over time on these travel corridors or travel gateways. For example, certain airports can serve certain international locations or certain domestic cities, while certain rail stations can serve different portions of the country within different time-frames defined by a natural commuting velocity. These techniques can be very powerful for identifying changes in travel commute, likely destinations at the end of the travel corridor, and visited merchant locations and can be informed by similar customers/devices from an archetype perspective to anticipate future locations and regularity of commuting patterns.

Supervised and unsupervised models can be used to generate abnormality scores. Supervised models can require tags. Examples of supervised models include fraud models where the outcomes are reported as being fraudulent or non-fraudulent. With mobile attribute profiling, however, it may be more natural to use abnormality scores rather than fraud scores because most users behave differently at times. Moreover, there may be less objective tags available to quantify the degree of abnormality. As described above, assessing whether a particular transaction is abnormal can depend on matches in recurrence lists, trajectory calculations, differences from collaborative profile archetypes, degree of risk based on network scores, and globally informed risks based on big data aggregation techniques. In order to compare the values of these variables in a global manner across the entire user base, server 130 can use recursive quantile tracking methods.

To compute online percentile estimators of the variables, server 130 can use the techniques disclosed in the following references: (1) Tierney, L. A space-efficient recursive procedure for estimating a quantile of an unknown distribution. SIAM Journal on Scientific and Statistical Computing, 4:706-711, 1983; and (2) Chen, F., Lambert, D., and Pinheiro, J., Incremental Quantile Estimation for Massive Tracking, Proceedings of the AAAI 2000 Conference on Knowledge Discovery and Data Mining, 2000.

An iteration can consist of observing M consecutive observations, where $M \geq 1$ is a free parameter. At the $n$-th iteration, an estimate of $\overline{x}^r$ can be updated; this estimate can be denoted by $\overline{x}_n^r$ at the $n$-th iteration. The i-th observation in the $n$-th iteration can be denoted as $x_n^i$, where $i$ is in [1, M]. At the $n$-th iteration, a density estimate $f_n$ can be computed for the variable x at the $r$-th percentile using the following equation:

$$f_n = (1 - w_n)f_{n-1} + w_n \frac{\sum_{i=1}^{M} 1\{| x_n^i - \overline{x}_{n-1}^r | \leq c_n\}}{2c_n M} \qquad \text{(Equation 1)}$$

where 1 {·} is an indicator function that takes the value of 1 if the condition inside the curly brackets is satisfied and 0 otherwise. The series $w_n$ and $c_n$ can satisfy some convergence criteria. One possible convergence criteria can include the following: $w_n = 1/n$ and $c_n = 1/\sqrt{n}$.

After $f_n$ is computed, $\overline{x}_n^r$ can be obtained as follows:

$$\overline{x}_n^r = \overline{x}_{n-1}^r + w_n \frac{r - \sum_{i=1}^{M} 1\{x_n^i \le \overline{x}_{n-1}^r\}/M}{e_{n-1}} \qquad \text{(Equation 2)}$$

where $e_n = \max\{f_n, f_0/\sqrt{n}\}$ and $f_0$ is an initial value of $f_n$.

Utilizing real-time recursive quantile estimation, the value of each variable can be recast into dimensionless values expressed in terms of the real-time estimate of the quantiles of a variable distribution. These transformations are important to allow the variable distribution to change over time and within segments of users/device types and to allow variables that have different value ranges to be recast on a common interpreted scale.

One such dimensionless scale can be based on outlier variable scaling. To determine the outlier values of the device and customer profile variables, server 130 can quantify the point in the distribution of values of the variables at which a variable is considered an outlier (i.e., when the variable's value exceeds that point). The 95% quantile of the distribution can be used to determine the threshold where the value is considered an outlier. Equation 3 can be used to perform a simple unconditional re-scaling across all independent variables

$$q(x_i \mid \theta) \equiv \frac{x_i - \theta_{i,1}}{\theta_{i,2}} \in [0, C] \qquad \text{(Equation 3)}$$

where $((\theta_{i,1}, \theta_{i,2}) \in \theta)$ are location and scale parameters respectively of the computed distribution of customer or device profile variable $x_i$. The scaled value can be bounded between 0 and some constant C to protect the analytics from extreme outlier values.

Utilizing Equation 3 where $\theta_1$ is the 95% quantile value and $\theta_2$ the distance between the 97% and the 95% quantiles, the different profile variables can have scaled values. Likewise, other mobile analytic profile variables can have their own unique real-values of values of $\theta_1$ and $\theta_2$ but in the space of $q(x_i \mid \theta)$ can be compared, for example of 10 profile variables the vector q may take on any of the following values:

q = (0, 0, 2.0, 0, 7.5, 0, 0, 0.137, 0.21, 0)

As indicated above, four of the ten profiling variables are above the 95% quintile of their respective profile variable distributions and only two are outlier values of 2.0 and 7.5.

In an implementation, equation 4 provides a method for using vector q to generate an unsupervised score.

$$\eta = \sum w_i q(x_i \mid t, s) \qquad \text{(Equation 4)}$$

Here the score, $\eta$, can be the summation of the q values. The variables in the q outlier scaling can be based on the segment, S, to which the device belongs. The weighting $w_i$ of different $q(x_i \mid t, s)$ can be based on expert knowledge or limited training data such that the score $\eta$ does not overemphasize weak mobile attribute variables and provides a correct ranking of large measures of abnormality globally based on multiple metrics. For example, the score $\eta$ can range from 1-999. A score of 1 may be normal, while a score of 999 may be abnormal. The larger the score $\eta$, the more substantial the deviation and need for investigation. More complex versions of outlier models such as Multi-Layer Self Calibrating models can be used to refine and improve the score as defined by one of the inventors in U.S. patent application no. 13/367,344, the contents of which are herein incorporated by reference in their entirety.

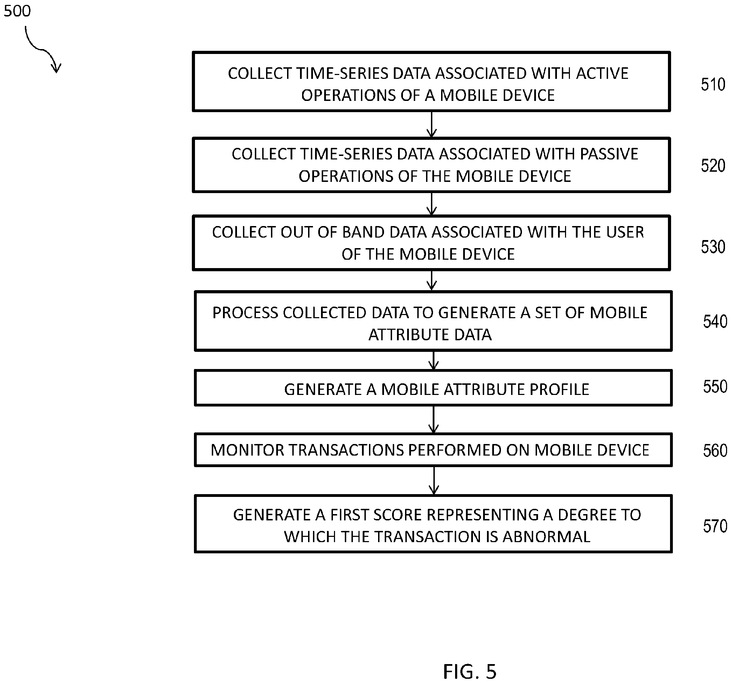

FIG. 5 illustrates a process 500 for determining whether a transaction conducted on a mobile device 110 or terminal devices 120A, 120B, and/or 120C is abnormal.

At 510, a processor can collect time-series data associated with active operations of the mobile device. The active operations can include interaction by a user with the mobile device, such as computing device 110. In some implementations, the active operations can include interaction with an application installed on the mobile device. The application can include, for example, a banking application, a shopping application, a social media application, a travel application, and the like when embedded in the core applications. The mobile device can transmit session information associated with these operations to server 130.

At 520, a processor can collect time-series data associated with passive operations of the mobile device. The passive operations performed by the mobile device can occur when there is no interaction by the user with the mobile device. This can occur, for example, when computing device 110 is in an idle state. During this idle state, computing device 110 can transmit data representative of its current location, the identity of the network to which it is connected, applications running on the computing device, and the like to server 130.

At 530, the processor can collect out of band data associated with the user of the mobile device. As explained above with respect to FIG. 1, a user can conduct various financial and nonfinancial transactions at terminals 120A, 120B, and 120C. These terminals can transmit data characterizing these transactions to server 130.

At 540, the processor can process the collected data to generate a set of mobile attribute data that define a behavior of one or more of the user and the mobile device.

At 550, the processor can generate a profile that contains summarizes past usage of one or more of the user and the mobile device. This profile can correspond, for example, to customer/device profile 210 can include profile variables for one or more selected attributes from the set of mobile attribute data. Customer/device profile 210 can be saved to data aggregator 140 and can be based on the data collected at 510, 520, and 530.

At 560, the processor can monitor transactions performed on the mobile device. These transactions can be related with at least one of the active operations, passive operations, and the out of band data. For example, if a user uses a shopping application on computing device 110 to purchase an item, the computing device can send data indicative of this purchase to network 130. This data can include information characterizing the purchase (e.g., a description of the purchased item, the purchase cost, and the like).

At 570, the processor can generate a first score representing the degree to which the transaction is abnormal. This score can be determined based on a variance of a usage of the mobile device in a time period associated with the transaction and a pattern of past usage. The pattern of past usage can include one or more favorites associated with the user and/or computing device 110. These favorites can be determined using a recursive frequency list, as described above with respect to FIG. 3.

One or more aspects or features of the subject matter described herein can be realized in digital electronic circuitry, integrated circuitry, specially designed application specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example would a processor cache or other random access memory associated with one or more physical processor cores.

To provide for interaction with a user, one or more aspects or features of the subject matter described herein can be implemented on a computer having a display device, such as for example a cathode ray tube (CRT), a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multi-point resistive or capacitive trackpads, voice recognition hardware and software, optical scanners, optical pointers, digital image capture devices and associated interpretation software, and the like.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results.

**Claims**

1. A method comprising:

collecting, by a processor, time-series data associated with one or more active operations of a mobile device, the one or more active operations comprising interaction by a user with the mobile device;
collecting, by the processor, time-series data associated with one or more passive operations of the mobile device, the one or more passive operations performed by the mobile device during an absence of interaction by the user with the mobile device;
collecting, by the processor, out of band data associated with the user of the mobile device;
processing, by the processor, the time-series data associated with the one or more active operations, the time-series data associated with the one or more passive operations, and the out of band data associated with the user to generate a set of mobile attribute data, the set of mobile attribute data representing one or more attributes that define a behavior of one or more of the user and the mobile device;
generating, by the processor, a profile containing one or more profile variables for each of one or more selected attributes from the set of mobile attribute data, the profile summarizing past usage of one or more of the user and the mobile device and representing a pattern of the past usage, the pattern of the past usage related to the time-series data associated with the one or more active operations, the time-series data associated with the one or more passive operations, and the out of band data;
monitoring, by the processor, a set of one or more transactions associated with the mobile device, the set of one or more transactions relating to at least one of the active operations, the passive operations, and the out of band data;
receiving, by the processor, a query from an external entity associated with a first transaction of the set of one or more transactions, the query requesting the processor to determine whether the first transaction is consistent with the behavior of the user;
comparing, by the processor and in response to the query, first time-series data associated with the first transaction with the profile of the user, the first time-series data being received by the processor from the mobile device;
generating, by the processor, a first score representing a degree to which the first transaction is abnormal, the first score being based on a variance of a usage of the mobile device in a time period associated with the set of one or more transactions and the pattern of the past usage;
determining, by the processor, a set of devices connected to a local network, the mobile device connected to the same local network;
generating, by the processor, a hash key based on the determined set of devices connected to the local network;
comparing, by the processor, the hash key with one or more older hash keys to determine whether a local network device membership is consistent;
generating, by the processor, a second score representing a degree to which the local network device membership is consistent;
using the second score, determining, by the processor, whether the local network is a trusted network;
adjusting the first score with the second score; and
stopping the first transaction based on determining the first transaction is abnormal.

2. The method in accordance with claim 1 further comprising:
generating, by the processor, a third score representative of a risk associated with the local network, the generating based on one or more of a number of unique devices connected to the local network, a length of time each unique device is connected to the network, an age of the network, and whether any of the unique devices previously conducted a fraudulent transaction.

3. The method in accordance with claim 2 further comprising:
characterizing the local network as a home network, a business network, a private network, a merchant network, or a public network.

4. The method in accordance with any of claims 1 to 3, wherein the pattern of past usage comprises one or more favorite attributes of the mobile device, the one or more favorites attributes determined using a numbers table, a frequency table, and a rankings table.

**5.** The method in accordance with any of claims 1 to 4 further comprising:
determining one or more differences between the one or more selected attributes in the profile and one or more attributes of a distribution of archetypes to which the mobile device belongs, the distribution of archetypes characterizing one or more behavioral patterns.

**6.** The method in accordance with claim 5, wherein the one or more attributes of the distribution of archetypes are based on one or more of time-series data associated with one or more active operations of mobile devices associated with others users, time-series data associated with one or more passive operations of the mobile devices associated with the other users, and out of band data associated with the other users.

**7.** The method in accordance with any of claims 1 to 6, wherein the time-series data associated with one or more passive operations of the mobile device and aggregation of many devices result in a determination of one or more travel corridors and travel gateways, the determination based on aggregate travel by one or more customers and one or more mobile devices.

**8.** The method in accordance with any of claims 1 to 7, wherein the interaction by the user with the mobile device comprises interaction with an application installed on the mobile device.

**9.** The method in accordance with any of claims 1 to 8, wherein the time-series data associated with one or more passive operations of the mobile device includes a location of the mobile device, a battery power level of the mobile device, device static data, an identity of a network to which the mobile device is connected, and an identity of the user logged onto the mobile device.

**10.** The method in accordance with any of claims 1 to 9, wherein the device static data includes one or more of a screen size of the mobile device, a screen resolution of the mobile device, and an operating system of the mobile device.

**11.** The method in accordance with any of claims 1 to 10, wherein the user is associated with the mobile device and one or more additional devices, and
wherein the mobile device is associated with the user and one or more additional users.

**12.** A non-transitory computer-readable medium containing instructions to configure a processor to perform operations comprising:

collecting, by a processor, time-series data associated with one or more active operations of a mobile device, the one or more active operations comprising interaction by a user with the mobile device;
collecting, by the processor, time-series data associated with one or more passive operations of the mobile device, the one or more passive operations performed by the mobile device during an absence of interaction by the user with the mobile device;
collecting, by the processor, out of band data associated with the user of the mobile device;
processing, by the processor, the time-series data associated with the one or more active operations, the time-series data associated with the one or more passive operations, and the out of band data associated with the user to generate a set of mobile attribute data, the set of mobile attribute data representing one or more attributes that define a behavior of one or more of the user and the mobile device;
generating, by the processor, a profile containing one or more profile variables for each of one or more selected attributes from the set of mobile attribute data, the profile summarizing past usage of one or more of the user and the mobile device and representing a pattern of the past usage, the pattern of the past usage related to the time-series data associated with the one or more active operations, the time-series data associated with the one or more passive operations, and the out of band data;
monitoring, by the processor, a set of one or more transactions associated with the mobile device, the set of one or more transactions relating to at least one of the active operations, the passive operations, and the out of band data;
receiving, by the processor, a query from an external entity associated with a first transaction of the set of one or more transactions, the query requesting the processor to determine whether the first transaction is consistent with the behavior of the user;
comparing, by the processor and in response to the query, first time-series data associated with the first transaction with the profile of the user, the first time-series data being received by the processor from the mobile device;
generating, by the processor, a first score representing a degree to which the first transaction is abnormal, the first score being based on a variance of a usage of the mobile device in a time period associated with the set of one or more transactions and the pattern of the past usage;

determining, by the processor, a set of devices connected to a local network, the mobile device connected to the same local network;

generating, by the processor, a hash key based on the determined set of devices connected to the local network;

comparing, by the processor, the hash key with one or more older hash keys to determine whether a local network device membership is consistent;

generating, by the processor, a second score representing a degree to which the local network device membership is consistent;

using the second score, determining, by the processor, whether the local network is a trusted network;

adjusting the first score with the second score; and

stopping the first transaction based on determining the first transaction is abnormal.

13. A system comprising:

at least one processor; and

at least one memory, wherein the at least one processor and the at least one memory are configured to perform operations comprising:

collecting, by a processor, time-series data associated with one or more active operations of a mobile device, the one or more active operations comprising interaction by a user with the mobile device;

collecting, by the processor, time-series data associated with one or more passive operations of the mobile device, the one or more passive operations performed by the mobile device during an absence of interaction by the user with the mobile device;

collecting, by the processor, out of band data associated with the user of the mobile device;

processing, by the processor, the time-series data associated with the one or more active operations, the time-series data associated with the one or more passive operations, and the out of band data associated with the user to generate a set of mobile attribute data, the set of mobile attribute data representing one or more attributes that define a behavior of one or more of the user and the mobile device;

generating, by the processor, a profile containing one or more profile variables for each of one or more selected attributes from the set of mobile attribute data, the profile summarizing past usage of one or more of the user and the mobile device and representing a pattern of the past usage, the pattern of the past usage related to the time-series data associated with the one or more active operations, the time-series data associated with the one or more passive operations, and the out of band data;

monitoring, by the processor, a set of one or more transactions associated with the mobile device, the set of one or more transactions relating to at least one of the active operations, the passive operations, and the out of band data;

receiving, by the processor, a query from an external entity associated with a first transaction of the set of one or more transactions, the query requesting the processor to determine whether the first transaction is consistent with the behavior of the user;

comparing, by the processor and in response to the query, first time-series data associated with the first transaction with the profile of the user, the first time-series data being received by the processor from the mobile device;

generating, by the processor, a first score representing a degree to which the first transaction is abnormal, the first score being based on a variance of a usage of the mobile device in a time period associated with the set of one or more transactions and the pattern of the past usage;

determining, by the processor, a set of devices connected to a local network, the mobile device connected to the same local network;

generating, by the processor, a hash key based on the determined set of devices connected to the local network;

comparing, by the processor, the hash key with one or more older hash keys to determine whether a local network device membership is consistent;

generating, by the processor, a second score representing a degree to which the local network device membership is consistent;

using the second score, determining, by the processor, whether the local network is a trusted network;

adjusting the first score with the second score; and

stopping the first transaction based on determining the first transaction is abnormal.

**Patentansprüche**

1. Ein Verfahren, das Folgendes umfasst:

   Sammeln, durch einen Prozessor, von Zeitreihen-Daten, die einer oder mehreren aktiven Operationen (*operations*) eines mobilen Geräts zugeordnet sind, wobei die eine oder die mehreren aktiven Operationen eine Interaktion durch einen Benutzer mit dem mobilen Gerät umfassen;

   Sammeln, durch den Prozessor, von Zeitreihen-Daten, die einer oder mehreren passiven Operationen des mobilen Geräts zugeordnet sind, wobei die eine oder die mehreren passiven Operationen von dem mobilen Gerät während einer Abwesenheit von Interaktion durch den Benutzer mit dem mobilen Gerät durchgeführt werden;

   Sammeln, durch den Prozessor, von Außerbanddaten bzw. *Out-of-Band*-Daten (*out of band data*), die dem Benutzer des mobilen Geräts zugeordnet sind;

   Verarbeiten, durch den Prozessor, der Zeitreihen-Daten, die der einen oder den mehreren aktiven Operationen zugeordnet sind, der Zeitreihen-Daten die der einen oder den mehreren passiven Operationen zugeordnet sind, und der *Out-of*-Band-Daten, die dem Benutzer zugeordnet sind, um einen Satz von Mobilattributdaten (*mobile attribute data*) zu erzeugen, wobei der Satz von Mobilattributdaten ein oder mehrere Attribute darstellt, die ein Verhalten eines oder mehrerer von dem Benutzer und dem Mobilgerät definieren;

   Erzeugen, durch den Prozessor, eines Profils, das eine oder mehrere Profilvariablen für jedes von einem oder mehreren ausgewählten Attributen aus dem Satz von Mobilattributdaten enthält, wobei das Profil eine vergangene Nutzung von einem oder mehreren von dem Benutzer und dem mobilen Gerät zusammenfasst und ein Muster der vergangenen Nutzung darstellt, wobei das Muster der vergangenen Nutzung mit den Zeitreihen-Daten, die der einen oder den mehreren aktiven Operationen zugeordnet sind, den Zeitreihen-Daten, die der einen oder den mehreren passiven Operationen zugeordnet sind, und den *Out-of-Band-Daten* in Beziehung steht;

   Überwachen, durch den Prozessor, eines Satzes von einer oder mehreren Transaktionen, die dem mobilen Gerät zugeordnet sind, wobei sich der Satz von einer oder mehreren Transaktionen auf mindestens eine der aktiven Operationen, der passiven Operationen und der *Out-of-Band-Daten* bezieht;

   Empfangen, durch den Prozessor, einer Abfrage von einer externen Entität, die einer ersten Transaktion des Satzes von einer oder mehreren Transaktionen zugeordnet ist, wobei die Abfrage den Prozessor auffordert, zu bestimmen, ob die erste Transaktion mit dem Verhalten des Benutzers vereinbar bzw. konsistent (*consistent*) ist;

   Vergleichen, durch den Prozessor und als Antwort auf die Abfrage, erster Zeitreihen-Daten, die der ersten Transaktion zugeordnet sind, mit dem Profil des Benutzers, wobei die ersten Zeitreihen-Daten vom mobilen Gerät ausgehend durch den Prozessor empfangen werden;

   Erzeugen, durch den Prozessor, einer ersten Punktzahl bzw. Wertung (*score*), die einen Grad der Abnormalität der ersten Transaktion angibt, wobei die erste Wertung auf einer Varianz einer Nutzung des mobilen Geräts in einer Zeitperiode, die dem Satz von einer oder mehreren Transaktionen zugeordnet ist, und dem Muster der vergangenen Nutzung basiert;

   Bestimmen, durch den Prozessor, eines Satzes von Geräten, die mit einem lokalen Netzwerk verbunden sind, wobei das mobile Gerät mit demselben lokalen Netzwerk verbunden ist;

   Erzeugen, durch den Prozessor, eines Hash-Schlüssels auf der Grundlage des bestimmten Satzes von Geräten, die mit dem lokalen Netzwerk verbunden sind;

   Vergleichen, durch den Prozessor, des Hash-Schlüssels mit einem oder mehreren älteren Hash-Schlüsseln, um festzustellen, ob die Zugehörigkeit eines Geräts zum lokalen Netzwerk konsistent ist;

   Erzeugen, durch den Prozessor, einer zweiten Wertung, die den Konsistenz-Grad der Zugehörigkeit des Geräts zum lokalen Netzwerk darstellt;

   unter Verwendung der zweiten Wertung, Bestimmen, durch den Prozessor, ob das lokale Netzwerk ein vertrauenswürdiges Netzwerk ist;

   Anpassen des ersten Wertes an den zweiten Wert; und

   Stoppen der ersten Transaktion auf der Grundlage der Feststellung, dass die erste Transaktion abnormal ist.

2. Das Verfahren nach Anspruch 1, das ferner Folgendes umfasst:
   Erzeugen einer dritten Wertung durch den Prozessor, die für ein dem lokalen Netzwerk zugeordnetes Risiko repräsentativ ist, wobei das Erzeugen auf einem oder mehreren der folgenden Elemente basiert: auf einer Anzahl von eindeutigen Geräten, die mit dem lokalen Netzwerk verbunden sind, auf einer Zeitdauer, während der jedes eindeutige Gerät mit dem Netzwerk verbunden ist, auf einem Alter des Netzwerks, und darauf, ob eines der eindeutigen Geräte zuvor eine betrügerische Transaktion durchgeführt hat.

3. Das Verfahren nach Anspruch 2, das ferner Folgendes umfasst:
Charakterisieren des lokalen Netzwerks als ein Heimnetzwerk, ein Geschäftsnetzwerk, ein privates Netzwerk, ein Händlernetzwerk oder ein öffentliches Netzwerk.

4. Das Verfahren nach irgendeinem der Ansprüche von 1 bis 3, wobei das Muster der vergangenen Nutzung ein oder mehrere Favoritenattribute bzw. bevorzugte Attribute (*favorite attributes*) des mobilen Geräts umfasst, wobei das eine oder die mehreren bevorzugten Attribute unter Verwendung einer Zahlentabelle, einer Häufigkeitstabelle und einer Rangtabelle bestimmt werden.

5. Das Verfahren nach irgendeinem der Ansprüche von 1 bis 4, das ferner Folgendes umfasst:
Bestimmen eines oder mehrerer Unterschiede zwischen dem einen oder den mehreren ausgewählten Attributen im Profil und einem oder mehreren Attributen einer Verteilung von Archetypen, zu denen das mobile Gerät gehört, wobei die Verteilung von Archetypen ein oder mehrere Verhaltensmuster charakterisiert.

6. Das Verfahren nach Anspruch 5, wobei das eine oder die mehreren Attribute der Verteilung von Archetypen auf einem oder mehreren der folgenden Elemente basieren: auf Zeitreihen-Daten, die einer oder mehreren aktiven Operationen von mobilen Geräten zugeordnet sind, die anderen Benutzern zugeordnet sind, auf Zeitreihen-Daten, die einer oder mehreren passiven Operationen der mobilen Geräte zugeordnet sind, die anderen Benutzern zugeordnet sind, und auf *Out-of-Band-Daten,* die anderen Benutzern zugeordnet sind.

7. Das Verfahren nach irgendeinem der Ansprüche von 1 bis 6, wobei die einer oder mehreren passiven Operationen des mobilen Geräts zugeordneten Zeitreihen-Daten und die Aggregation vieler Geräte zu einer Bestimmung eines oder mehrerer Reisekorridore (*travel corridors*) und Reisegateways (*travel gateways*) führen, wobei die Bestimmung auf der aggregierten Reise eines oder mehrerer Kunden und eines oder mehrerer mobilen Geräte basiert.

8. Das Verfahren nach irgendeinem der Ansprüche von 1 bis 7, wobei die Interaktion des Benutzers mit dem mobilen Gerät die Interaktion mit einer auf dem mobilen Gerät installierten Anwendung umfasst.

9. Das Verfahren nach irgendeinem der Ansprüche von 1 bis 8, wobei die einer oder mehreren passiven Operationen des mobilen Geräts zugeordneten Zeitreihen-Daten Folgendes beinhalten: einen Standort des mobilen Geräts, einen Batteriestand des mobilen Geräts, statische Gerätedaten, eine Identität eines Netzes, mit dem das mobile Gerät verbunden ist, und eine Identität des am mobilen Gerät angemeldeten Benutzers.

10. Das Verfahren nach irgendeinem der Ansprüche von 1 bis 9, wobei die statischen Daten des Geräts eines oder mehrere der folgenden Elemente beinhalten: eine Bildschirmgröße des mobilen Geräts, eine Bildschirmauflösung des mobilen Geräts und ein Betriebssystem des mobilen Geräts.

11. Das Verfahren nach irgendeinem der Ansprüche von 1 bis 10, wobei der Benutzer dem mobilen Gerät und einem oder mehreren zusätzlichen Geräten zugeordnet ist, und
wobei das mobile Gerät dem Benutzer und einem oder mehreren zusätzlichen Benutzern zugeordnet ist.

12. Ein nicht-flüchtiges computerlesbares Medium, das Anweisungen zur Konfiguration eines Prozessors zum Durchführen von Operationen enthält, die Folgendes umfassen:

Sammeln, durch einen Prozessor, von Zeitreihen-Daten, die einer oder mehreren aktiven Operationen (*operations*) eines mobilen Geräts zugeordnet sind, wobei die eine oder die mehreren aktiven Operationen eine Interaktion durch einen Benutzer mit dem mobilen Gerät umfassen;
Sammeln, durch den Prozessor, von Zeitreihen-Daten, die einer oder mehreren passiven Operationen des mobilen Geräts zugeordnet sind, wobei die eine oder die mehreren passiven Operationen von dem mobilen Gerät während einer Abwesenheit von Interaktion durch den Benutzer mit dem mobilen Gerät durchgeführt werden;
Sammeln, durch den Prozessor, von Außerbanddaten bzw. *Out-of-Band*-Daten (*out of band data*), die dem Benutzer des mobilen Geräts zugeordnet sind;
Verarbeiten, durch den Prozessor, der Zeitreihen-Daten, die der einen oder den mehreren aktiven Operationen zugeordnet sind, der Zeitreihen-Daten die der einen oder den mehreren passiven Operationen zugeordnet sind, und der *Out-of*-Band-Daten, die dem Benutzer zugeordnet sind, um einen Satz von Mobilattributdaten (*mobile attribute data*) zu erzeugen, wobei der Satz von Mobilattributdaten ein oder mehrere Attribute darstellt, die ein Verhalten eines oder mehrerer von dem Benutzer und dem Mobilgerät definieren;

Erzeugen, durch den Prozessor, eines Profils, das eine oder mehrere Profilvariablen für jedes von einem oder mehreren ausgewählten Attributen aus dem Satz von Mobilattributdaten enthält, wobei das Profil eine vergangene Nutzung von einem oder mehreren von dem Benutzer und dem mobilen Gerät zusammenfasst und ein Muster der vergangenen Nutzung darstellt, wobei das Muster der vergangenen Nutzung mit den Zeitreihen-Daten, die der einen oder den mehreren aktiven Operationen zugeordnet sind, den Zeitreihen-Daten, die der einen oder den mehreren passiven Operationen zugeordnet sind, und den *Out-of-Band-Daten* in Beziehung steht;

Überwachen, durch den Prozessor, eines Satzes von einer oder mehreren Transaktionen, die dem mobilen Gerät zugeordnet sind, wobei sich der Satz von einer oder mehreren Transaktionen auf mindestens eine der aktiven Operationen, der passiven Operationen und der *Out-of-Band-Daten* bezieht;

Empfangen, durch den Prozessor, einer Abfrage von einer externen Entität, die einer ersten Transaktion des Satzes von einer oder mehreren Transaktionen zugeordnet ist, wobei die Abfrage den Prozessor auffordert, zu bestimmen, ob die erste Transaktion mit dem Verhalten des Benutzers vereinbar bzw. konsistent (*consistent*) ist;

Vergleichen, durch den Prozessor und als Antwort auf die Abfrage, erster Zeitreihen-Daten, die der ersten Transaktion zugeordnet sind, mit dem Profil des Benutzers, wobei die ersten Zeitreihen-Daten vom mobilen Gerät ausgehend durch den Prozessor empfangen werden;

Erzeugen, durch den Prozessor, einer ersten Punktzahl bzw. Wertung (*score*), die einen Grad der Abnormalität der ersten Transaktion angibt, wobei die erste Wertung auf einer Varianz einer Nutzung des mobilen Geräts in einer Zeitperiode, die dem Satz von einer oder mehreren Transaktionen zugeordnet ist, und dem Muster der vergangenen Nutzung basiert;

Bestimmen, durch den Prozessor, eines Satzes von Geräten, die mit einem lokalen Netzwerk verbunden sind, wobei das mobile Gerät mit demselben lokalen Netzwerk verbunden ist;

Erzeugen, durch den Prozessor, eines Hash-Schlüssels auf der Grundlage des bestimmten Satzes von Geräten, die mit dem lokalen Netzwerk verbunden sind;

Vergleichen, durch den Prozessor, des Hash-Schlüssels mit einem oder mehreren älteren Hash-Schlüsseln, um festzustellen, ob die Zugehörigkeit eines Geräts zum lokalen Netzwerk konsistent ist;

Erzeugen, durch den Prozessor, einer zweiten Wertung, die den Konsistenz-Grad der Zugehörigkeit des Geräts zum lokalen Netzwerk darstellt;

unter Verwendung der zweiten Wertung, Bestimmen, durch den Prozessor, ob das lokale Netzwerk ein vertrauenswürdiges Netzwerk ist;

Anpassen des ersten Wertes an den zweiten Wert; und

Stoppen der ersten Transaktion auf der Grundlage der Feststellung, dass die erste Transaktion abnormal ist.

13. Ein System, das Folgendes umfasst:

mindestens einen Prozessor; und

mindestens einen Speicher, wobei der mindestens eine Prozessor und der mindestens eine Speicher konfiguriert sind, um Operationen durchzuführen, die Folgendes umfassen:

Sammeln, durch einen Prozessor, von Zeitreihen-Daten, die einer oder mehreren aktiven Operationen (*operations*) eines mobilen Geräts zugeordnet sind, wobei die eine oder die mehreren aktiven Operationen eine Interaktion durch einen Benutzer mit dem mobilen Gerät umfassen;

Sammeln, durch den Prozessor, von Zeitreihen-Daten, die einer oder mehreren passiven Operationen des mobilen Geräts zugeordnet sind, wobei die eine oder die mehreren passiven Operationen von dem mobilen Gerät während einer Abwesenheit von Interaktion durch den Benutzer mit dem mobilen Gerät durchgeführt werden;

Sammeln, durch den Prozessor, von Außerbanddaten bzw. *Out-of-Band*-Daten (*out of band data*), die dem Benutzer des mobilen Geräts zugeordnet sind;

Verarbeiten, durch den Prozessor, der Zeitreihen-Daten, die der einen oder den mehreren aktiven Operationen zugeordnet sind, der Zeitreihen-Daten die der einen oder den mehreren passiven Operationen zugeordnet sind, und der *Out-of*-Band-Daten, die dem Benutzer zugeordnet sind, um einen Satz von Mobilattributdaten (*mobile attribute data*) zu erzeugen, wobei der Satz von Mobilattributdaten ein oder mehrere Attribute darstellt, die ein Verhalten eines oder mehrerer von dem Benutzer und dem Mobilgerät definieren;

Erzeugen, durch den Prozessor, eines Profils, das eine oder mehrere Profilvariablen für jedes von einem oder mehreren ausgewählten Attributen aus dem Satz von Mobilattributdaten enthält, wobei das Profil eine vergangene Nutzung von einem oder mehreren von dem Benutzer und dem mobilen Gerät zusammenfasst und ein Muster der vergangenen Nutzung darstellt, wobei das Muster der vergangenen Nutzung mit den Zeitreihen-Daten, die der einen oder den mehreren aktiven Operationen zugeordnet sind, den Zeitreihen-Daten, die der einen oder den mehreren passiven Operationen zugeordnet sind, und den *Out-of-Band-Daten* in Beziehung steht;

Überwachen, durch den Prozessor, eines Satzes von einer oder mehreren Transaktionen, die dem mobilen Gerät zugeordnet sind, wobei sich der Satz von einer oder mehreren Transaktionen auf mindestens eine der aktiven Operationen, der passiven Operationen und der *Out-of-Band-Daten* bezieht;

Empfangen, durch den Prozessor, einer Abfrage von einer externen Entität, die einer ersten Transaktion des Satzes von einer oder mehreren Transaktionen zugeordnet ist, wobei die Abfrage den Prozessor auffordert, zu bestimmen, ob die erste Transaktion mit dem Verhalten des Benutzers vereinbar bzw. konsistent (*consistent*) ist;

Vergleichen, durch den Prozessor und als Antwort auf die Abfrage, erster Zeitreihen-Daten, die der ersten Transaktion zugeordnet sind, mit dem Profil des Benutzers, wobei die ersten Zeitreihen-Daten vom mobilen Gerät ausgehend durch den Prozessor empfangen werden;

Erzeugen, durch den Prozessor, einer ersten Punktzahl bzw. Wertung (*score*), die einen Grad der Abnormalität der ersten Transaktion angibt, wobei die erste Wertung auf einer Varianz einer Nutzung des mobilen Geräts in einer Zeitperiode, die dem Satz von einer oder mehreren Transaktionen zugeordnet ist, und dem Muster der vergangenen Nutzung basiert;

Bestimmen, durch den Prozessor, eines Satzes von Geräten, die mit einem lokalen Netzwerk verbunden sind, wobei das mobile Gerät mit demselben lokalen Netzwerk verbunden ist;

Erzeugen, durch den Prozessor, eines Hash-Schlüssels auf der Grundlage des bestimmten Satzes von Geräten, die mit dem lokalen Netzwerk verbunden sind;

Vergleichen, durch den Prozessor, des Hash-Schlüssels mit einem oder mehreren älteren Hash-Schlüsseln, um festzustellen, ob die Zugehörigkeit eines Geräts zum lokalen Netzwerk konsistent ist;

Erzeugen, durch den Prozessor, einer zweiten Wertung, die den Konsistenz-Grad der Zugehörigkeit des Geräts zum lokalen Netzwerk darstellt;

unter Verwendung der zweiten Wertung, Bestimmen, durch den Prozessor, ob das lokale Netzwerk ein vertrauenswürdiges Netzwerk ist;

Anpassen des ersten Wertes an den zweiten Wert; und

Stoppen der ersten Transaktion auf der Grundlage der Feststellung, dass die erste Transaktion abnormal ist.

## Revendications

1. Un procédé, comprenant le fait de :

collecter, par un processeur, des données en série temporelle associées à une ou plusieurs opérations actives d'un dispositif mobile, la ou les opérations actives comprenant l'interaction par un utilisateur avec le dispositif mobile ;

collecter, par le processeur, des données en série temporelle associées à une ou plusieurs opérations passives du dispositif mobile, la ou les opérations passives étant effectuées par le dispositif mobile en l'absence d'interaction entre l'utilisateur et le dispositif mobile ;

collecter, par le processeur, des données hors bande associées à l'utilisateur du dispositif mobile ;

traiter, par le processeur, les données en série temporelle associées à une ou plusieurs opérations actives, les données en série temporelle associées à une ou plusieurs opérations passives et les données hors bande associées à l'utilisateur pour générer un ensemble de données d'attributs mobiles *(mobile attribute data),* l'ensemble de données d'attributs mobiles représentant un ou plusieurs attributs qui définissent un comportement d'un ou plusieurs parmi l'utilisateur et le dispositif mobile ;

générer, par le processeur, un profil contenant une ou plusieurs variables de profil pour chacun d'un ou plusieurs attributs sélectionnés dans l'ensemble de données d'attributs mobiles, le profil résumant l'utilisation passée d'un ou plusieurs parmi l'utilisateur et le dispositif mobile et représentant un schéma d'utilisation passée, le schéma d'utilisation passée se rapportant aux données en série temporelle associées à la ou les opérations actives, aux données en série temporelle associées à la ou les opérations passives et aux données hors bande ;

surveiller, par le processeur, un ensemble d'une ou plusieurs transactions associées à le dispositif mobile, l'ensemble d'une ou plusieurs transactions se rapportant à au moins une des opérations actives, des opérations passives et des données hors bande ;

recevoir, par le processeur, une requête de la part d'une entité externe associée à une première transaction de l'ensemble d'une ou plusieurs transactions, la requête demandant au processeur de déterminer si la première transaction est cohérente avec le comportement de l'utilisateur ;

comparer, par le processeur et en réponse à la requête, les premières données en série temporelle associées à la première transaction avec le profil de l'utilisateur, les premières données en série temporelle étant reçues par le processeur de la part du dispositif mobile ;

générer, par le processeur, un premier score représentant le degré d'anormalité de la première transaction, le premier score étant basé sur la variance de l'utilisation du dispositif mobile au cours d'une période associée à l'ensemble d'une ou de plusieurs transactions et sur le schéma d'utilisation passé ;

déterminer, par le processeur, un ensemble de dispositifs connectés à un réseau local, le dispositif mobile étant connecté au même réseau local ;

générer, par le processeur, une clé de hachage basée sur l'ensemble déterminé de dispositifs connectés au réseau local ;

comparer, par le processeur, la clé de hachage à une ou plusieurs clés de hachage plus anciennes afin de déterminer si l'appartenance d'un dispositif au réseau local est cohérente ;

générer, par le processeur, un deuxième score représentant un degré de cohérence de l'appartenance d'un dispositif au réseau local ;

à l'aide du deuxième score, déterminer, par le processeur, si le réseau local est un réseau de confiance ;

ajuster le premier score avec le deuxième score ; et de

arrêter la première transaction sur la base de la détermination que la première transaction est anormale.

2. Le procédé d'après la revendication 1, comprenant en outre le fait de :
générer, par le processeur, un troisième score représentatif d'un risque associé au réseau local, la génération étant basée sur un ou plusieurs éléments parmi : un nombre de dispositifs uniques connectés au réseau local, une durée de connexion de chaque dispositif unique au réseau, un âge du réseau, et en fonction de l'existence ou non de dispositifs uniques ayant précédemment effectué une transaction frauduleuse.

3. Le procédé d'après la revendication 2 comprend en outre le fait de :
caractériser le réseau local comme étant un réseau domestique, un réseau d'entreprise, un réseau privé, un réseau marchand ou un réseau public.

4. Le procédé d'après l'une des revendications de 1 à 3, sachant que le schéma d'utilisation passée comprend un ou plusieurs attributs favoris (*favorite attributes*) du dispositif mobile, les attributs favoris étant déterminés à l'aide d'un tableau de nombres, d'un tableau de fréquences et d'un tableau de classements.

5. Le procédé d'après l'une quelconque des revendications de 1 à 4, comprenant en outre le fait de :
déterminer une ou plusieurs différences entre le ou les attributs sélectionnés dans le profil et un ou plusieurs attributs d'une distribution d'archétypes à laquelle le dispositif mobile appartient, la distribution d'archétypes caractérisant un ou plusieurs modèles de comportement.

6. Le procédé d'après la revendication 5, sachant que le ou les attributs de la distribution d'archétypes sont basés sur un ou plusieurs parmi : les données en série temporelle associées à une ou plusieurs opérations actives des dispositifs mobiles associés à d'autres utilisateurs, les données en série temporelle associées à une ou plusieurs opérations passives des dispositifs mobiles associés aux autres utilisateurs, et les données hors bande associées aux autres utilisateurs.

7. Le procédé d'après l'une quelconque des revendications de 1 à 6, sachant que les données en série temporelle associées à une ou plusieurs opérations passives du dispositif mobile et l'agrégation de nombreux dispositifs permettent de déterminer un ou plusieurs couloirs de déplacement (*travel corridors*) et passerelles de déplacement (*travel gateways*), la détermination étant basée sur les déplacements agrégés d'un ou plusieurs clients et d'un ou plusieurs dispositifs mobiles.

8. Le procédé d'après l'une quelconque des revendications de 1 à 7, sachant que l'interaction de l'utilisateur avec le dispositif mobile comprend l'interaction avec une application installée sur le dispositif mobile.

9. Le procédé d'après l'une quelconque des revendications de 1 à 8, sachant que les données en série temporelle associées à une ou plusieurs opérations passives du dispositif mobile incluent : une localisation du dispositif mobile, un niveau de puissance de la batterie du dispositif mobile, des données statiques du dispositif, une identité d'un réseau auquel le dispositif mobile est connecté, et une identité de l'utilisateur connecté au dispositif mobile.

10. Le procédé d'après l'une des revendications de 1 à 9, sachant que les données statiques du dispositif incluent une ou plusieurs données parmi : une taille d'écran du dispositif mobile, une résolution d'écran du dispositif mobile, et un système d'exploitation du dispositif mobile.

11. Le procédé d'après l'une quelconque des revendications de 1 à 10, sachant que l'utilisateur est associé au dispositif mobile et à un ou plusieurs dispositifs supplémentaires, et
sachant que le dispositif mobile est associé à l'utilisateur et à un ou plusieurs utilisateurs supplémentaires.

12. Un support lisible par ordinateur non-transitoire contenant des instructions pour configurer un processeur afin qu'il effectue des opérations comprenant le fait de :

collecter, par un processeur, des données en série temporelle associées à une ou plusieurs opérations actives d'un dispositif mobile, la ou les opérations actives comprenant l'interaction par un utilisateur avec le dispositif mobile ;
collecter, par le processeur, des données en série temporelle associées à une ou plusieurs opérations passives du dispositif mobile, la ou les opérations passives étant effectuées par le dispositif mobile en l'absence d'interaction entre l'utilisateur et le dispositif mobile ;
collecter, par le processeur, des données hors bande associées à l'utilisateur du dispositif mobile ;
traiter, par le processeur, les données en série temporelle associées à une ou plusieurs opérations actives, les données en série temporelle associées à une ou plusieurs opérations passives et les données hors bande associées à l'utilisateur pour générer un ensemble de données d'attributs mobiles (*mobile attribute data*), l'ensemble de données d'attributs mobiles représentant un ou plusieurs attributs qui définissent un comportement d'un ou plusieurs parmi l'utilisateur et le dispositif mobile ;
générer, par le processeur, un profil contenant une ou plusieurs variables de profil pour chacun d'un ou plusieurs attributs sélectionnés dans l'ensemble de données d'attributs mobiles, le profil résumant l'utilisation passée d'un ou plusieurs parmi l'utilisateur et le dispositif mobile et représentant un schéma d'utilisation passée, le schéma d'utilisation passée se rapportant aux données en série temporelle associées à la ou les opérations actives, aux données en série temporelle associées à la ou les opérations passives et aux données hors bande ;
surveiller, par le processeur, un ensemble d'une ou plusieurs transactions associées à le dispositif mobile, l'ensemble d'une ou plusieurs transactions se rapportant à au moins une des opérations actives, des opérations passives et des données hors bande ;
recevoir, par le processeur, une requête de la part d'une entité externe associée à une première transaction de l'ensemble d'une ou plusieurs transactions, la requête demandant au processeur de déterminer si la première transaction est cohérente avec le comportement de l'utilisateur ;
comparer, par le processeur et en réponse à la requête, les premières données en série temporelle associées à la première transaction avec le profil de l'utilisateur, les premières données en série temporelle étant reçues par le processeur de la part du dispositif mobile ;
générer, par le processeur, un premier score représentant le degré d'anormalité de la première transaction, le premier score étant basé sur la variance de l'utilisation du dispositif mobile au cours d'une période associée à l'ensemble d'une ou de plusieurs transactions et sur le schéma d'utilisation passé ;
déterminer, par le processeur, un ensemble de dispositifs connectés à un réseau local, le dispositif mobile étant connecté au même réseau local ;
générer, par le processeur, une clé de hachage basée sur l'ensemble déterminé de dispositifs connectés au réseau local ;
comparer, par le processeur, la clé de hachage à une ou plusieurs clés de hachage plus anciennes afin de déterminer si l'appartenance d'un dispositif au réseau local est cohérente ;
générer, par le processeur, un deuxième score représentant un degré de cohérence de l'appartenance d'un dispositif au réseau local ;
à l'aide du deuxième score, déterminer, par le processeur, si le réseau local est un réseau de confiance ;
ajuster le premier score avec le deuxième score ; et de
arrêter la première transaction sur la base de la détermination que la première transaction est anormale.

13. Un système comprenant :

au moins un processeur ; et
au moins une mémoire, sachant que le ou les processeurs et la ou les mémoires sont configurés pour effectuer des opérations comprenant le fait de :

collecter, par un processeur, des données en série temporelle associées à une ou plusieurs opérations actives d'un dispositif mobile, la ou les opérations actives comprenant l'interaction par un utilisateur avec le dispositif mobile ;

collecter, par le processeur, des données en série temporelle associées à une ou plusieurs opérations passives du dispositif mobile, la ou les opérations passives étant effectuées par le dispositif mobile en l'absence d'interaction entre l'utilisateur et le dispositif mobile ;

collecter, par le processeur, des données hors bande associées à l'utilisateur du dispositif mobile ;

traiter, par le processeur, les données en série temporelle associées à une ou plusieurs opérations actives, les données en série temporelle associées à une ou plusieurs opérations passives et les données hors bande associées à l'utilisateur pour générer un ensemble de données d'attributs mobiles (*mobile attribute data*), l'ensemble de données d'attributs mobiles représentant un ou plusieurs attributs qui définissent un comportement d'un ou plusieurs parmi l'utilisateur et le dispositif mobile ;

générer, par le processeur, un profil contenant une ou plusieurs variables de profil pour chacun d'un ou plusieurs attributs sélectionnés dans l'ensemble de données d'attributs mobiles, le profil résumant l'utilisation passée d'un ou plusieurs parmi l'utilisateur et le dispositif mobile et représentant un schéma d'utilisation passée, le schéma d'utilisation passée se rapportant aux données en série temporelle associées à la ou les opérations actives, aux données en série temporelle associées à la ou les opérations passives et aux données hors bande ;

surveiller, par le processeur, un ensemble d'une ou plusieurs transactions associées à le dispositif mobile, l'ensemble d'une ou plusieurs transactions se rapportant à au moins une des opérations actives, des opérations passives et des données hors bande ;

recevoir, par le processeur, une requête de la part d'une entité externe associée à une première transaction de l'ensemble d'une ou plusieurs transactions, la requête demandant au processeur de déterminer si la première transaction est cohérente avec le comportement de l'utilisateur ;

comparer, par le processeur et en réponse à la requête, les premières données en série temporelle associées à la première transaction avec le profil de l'utilisateur, les premières données en série temporelle étant reçues par le processeur de la part du dispositif mobile ;

générer, par le processeur, un premier score représentant le degré d'anormalité de la première transaction, le premier score étant basé sur la variance de l'utilisation du dispositif mobile au cours d'une période associée à l'ensemble d'une ou de plusieurs transactions et sur le schéma d'utilisation passé ;

déterminer, par le processeur, un ensemble de dispositifs connectés à un réseau local, le dispositif mobile étant connecté au même réseau local ;

générer, par le processeur, une clé de hachage basée sur l'ensemble déterminé de dispositifs connectés au réseau local ;

comparer, par le processeur, la clé de hachage à une ou plusieurs clés de hachage plus anciennes afin de déterminer si l'appartenance d'un dispositif au réseau local est cohérente ;

générer, par le processeur, un deuxième score représentant un degré de cohérence de l'appartenance d'un dispositif au réseau local ;

à l'aide du deuxième score, déterminer, par le processeur, si le réseau local est un réseau de confiance ;

ajuster le premier score avec le deuxième score ; et de

arrêter la première transaction sur la base de la détermination que la première transaction est anormale.

**FIG. 1**

140

Customer/Device Profiles 210

Archetypes 220

Network Fingerprints 230

Network Profiles 240

FIG. 2

**300**

### Number Table 310

| Index | Number |
|-------|--------|
| 1 | 1111 |
| 2 | 2222 |
| … | … |
| 11 | 1234 |
| 12 | 2323 |
| 13 | 3434 |
| 14 | 4321 |

### Frequency Table 320

| Index | Frequency |
|-------|-----------|
| 1 | 0.2 |
| 2 | 0.7 |
| … | … |
| 11 | 3.1 |
| 12 | 0.9 |
| 13 | 2.3 |
| 14 | 0.4 |

### Ranking Table 330

| Ranking | Index to Number |
|---------|-----------------|
| 1 | 11 |
| 2 | 13 |
| … | … |
| 11 | 12 |
| 12 | 2 |
| 13 | 14 |
| 14 | 1 |

**FIG. 3**

EP 3 320 512 B1

400

| Home Network Fingerprint | Frequency | Time First Observed | Time Last Observed |
|---|---|---|---|
| A*(@!MNKLJAH! | 0.9 | 4/21/2014 | 2 hours ago |
| AOIU&@QN!@( | 0.7 | 5/1/2014 | 6 hours ago |
| ... | | | ... |
| *@(*!(*88123bn | 0.00211 | 2/4/2012 | 4 months ago |

410  420  430  440

413

**FIG. 4**

500

```
┌──────────────────────────────────────────────────┐
│  COLLECT TIME-SERIES DATA ASSOCIATED WITH ACTIVE   │   510
│         OPERATIONS OF A MOBILE DEVICE              │
└──────────────────────────────────────────────────┘
                         ↓
┌──────────────────────────────────────────────────┐
│ COLLECT TIME-SERIES DATA ASSOCIATED WITH PASSIVE   │   520
│        OPERATIONS OF THE MOBILE DEVICE            │
└──────────────────────────────────────────────────┘
                         ↓
┌──────────────────────────────────────────────────┐
│ COLLECT OUT OF BAND DATA ASSOCIATED WITH THE USER  │   530
│             OF THE MOBILE DEVICE                  │
└──────────────────────────────────────────────────┘
                         ↓
┌──────────────────────────────────────────────────┐
│  PROCESS COLLECTED DATA TO GENERATE A SET OF MOBILE │   540
│               ATTRIBUTE DATA                      │
└──────────────────────────────────────────────────┘
                         ↓
┌──────────────────────────────────────────────────┐
│        GENERATE A MOBILE ATTRIBUTE PROFILE         │   550
└──────────────────────────────────────────────────┘
                         ↓
┌──────────────────────────────────────────────────┐
│  MONITOR TRANSACTIONS PERFORMED ON MOBILE DEVICE   │   560
└──────────────────────────────────────────────────┘
                         ↓
┌──────────────────────────────────────────────────┐
│  GENERATE A FIRST SCORE REPRESENTING A DEGREE TO   │   570
│      WHICH THE TRANSACTION IS ABNORMAL            │
└──────────────────────────────────────────────────┘
```

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014180974 A1
- US 2013204755 A1
- US 2010293094 A1
- US 2014207524 A1
- WO 2006034205 A2
- US 2012221721 A1

- US 2014316984 A1
- US 2013024373 A1
- US 2009006600 A1
- US 725561
- US 367344

**Non-patent literature cited in the description**

- **TIERNEY, L.** A space-efficient recursive procedure for estimating a quantile of an unknown distribution. *SIAM Journal on Scientific and Statistical Computing,* 1983, vol. 4, 706-711

- **CHEN, F. ; LAMBERT, D. ; PINHEIRO, J.** Proceedings of the AAAI 2000 Conference on Knowledge Discovery and Data Mining. *Incremental Quantile Estimation for Massive Tracking,* 2000